**Europäisches Patentamt**

**European Patent Office**

**Office européen des brevets**

(19)

(11) Numéro de publication : **0 288 348 B1**

(12)

# FASCICULE DE BREVET EUROPEEN

(45) Date de publication du fascicule du brevet :
**18.12.91 Bulletin 91/51**

(51) Int. Cl.⁵ : **F16D 67/02**

(21) Numéro de dépôt : **88400727.9**

(22) Date de dépôt : **24.03.88**

(54) **Dispositif d'entraînement d'un organe rotatif tel qu'une lame de tondeuse à gazon.**

(30) Priorité : **21.04.87 FR 8705629**

(43) Date de publication de la demande :
**26.10.88 Bulletin 88/43**

(45) Mention de la délivrance du brevet :
**18.12.91 Bulletin 91/51**

(84) Etats contractants désignés :
**BE DE FR GB IT NL**

(56) Documents cités :
**DE-A- 2 804 799
GB-A- 1 461 485
US-A- 4 538 711
US-E- 32 202**

(73) Titulaire : **PEUGEOT MOTOCYCLES
Rue du 17 Novembre
F-25350 Beaulieu Mandeure (FR)**

(72) Inventeur : **Perrin, Marc
9, rue de la Belle Alise Blamond
F-25310 Herimoncourt (FR)**

(74) Mandataire : **Mestre, Jean et al
c/o CABINET LAVOIX 2, place d'Estienne
d'Orves
F-75441 Paris Cédex 09 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne les dispositifs d'entraînement à embrayage notamment pour tondeuses à gazon à lame rotative, scies circulaires, etc....

Il existe des tondeuses à gazon dans lesquelles la lame est entraînée directement par le vilebrequin d'un moteur thermique, mais pour des raisons de sécurité et pour faciliter le démarrage du moteur, il est préférable de disposer un embrayage entre le moteur et l'organe de travail. De cette façon, on a la possibilité d'arrêter ce dernier sans arrêter le moteur.

On connaît des embrayages à friction montés sur des tondeuses à gazon afin d'assurer l'accouplement et le désaccouplement de la lame par rapport à l'arbre d'entraînement. Les tondeuses pourvues de ces embrayages possèdent deux commandes distinctes, l'une étant la commande des gaz du moteur et l'autre la commande d'embrayage. Le fait d'avoir plusieurs commandes complique le dispositif, le rend plus difficile à manoeuvrer et diminue par conséquent la sécurité.

Un autre état de la technique est illustré par le document US Re 32202. Ce document montre les caractéristiques définies dans le préambule de la revendication 1 et propose un dispositif d'entraînement à fonctionnement totalement automatique asservi à la vitesse de rotation qui comprend un ensemble unique de moyens qui sont utilisés pour assurer la double fonction d'embrayage et de frein. Ce dispositif opère de manière que d'abord le frein soit neutralisé et qu'ensuite l'embrayage s'active.

Un autre document US 4538711, décrit un dispositif d'entraînement à fonctionnement non totalement automatique ni asservi à la vitesse de rotation, mais manuel qui comprend un élément mobile qui est utilisé pour assurer la double fonction d'embrayage et de frein. Ici encore ce dispositif opère de manière que d'abord le frein soit neutralisé et qu'ensuite l'embrayage s'active.

Afin d'améliorer la sécurité lors de l'emploi d'une tondeuse à moteur thermique, l'invention a pour but de proposer un dispositif dans lequel les deux fonctions de commande des gaz et de commande de l'embrayage puissent être réalisées par un organe unique, l'embrayage étant, en outre, muni d'un frein à friction automatique.

L'invention a pour objet un dispositif d'entraînement du type de celui exposé dans le préambule de la revendication principale et dont les particularités ressortent notamment de la partie caractérisante de celle-ci.

L'invention va être décrite plus en détail ci-dessous en référence aux dessins annexés, dans lesquels :

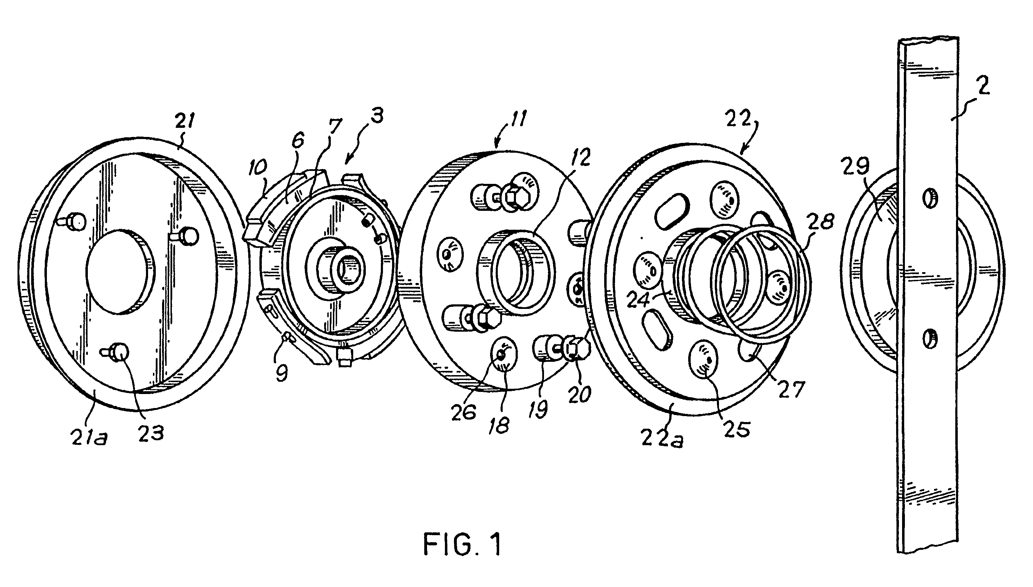

— la figure 1 est une vue générale éclatée du dispositif ;

— la figure 2 est une vue en coupe axiale du dispositif selon la ligne II-II de la figure 4 ;

— la figure 3 est une vue en coupe radiale de l'embrayage selon la ligne III-III de la figure 2 ;

— la figure 4 est une vue en coupe radiale de l'embrayage selon la ligne IV-IV de la figure 2.

— la figure 5 montre une variante de réalisation du dispositif selon l'invention, en coupe suivant la ligne V-V de la figure 6 ; et

— la figure 6 est une vue en coupe suivant la ligne VI-VI de la figure 5.

Le dispositif est placé entre un moteur thermique (non représenté) d'une tondeuse à gazon et un organe de travail de celle-ci. Le vilebrequin 1 du moteur constitue un arbre moteur et la lame 2 un organe rotatif entre lesquels est disposé un embrayage centrifuge comportant un organe menant tel un tambour d'entraînement 3 solidaire en rotation du vilebrequin 1.

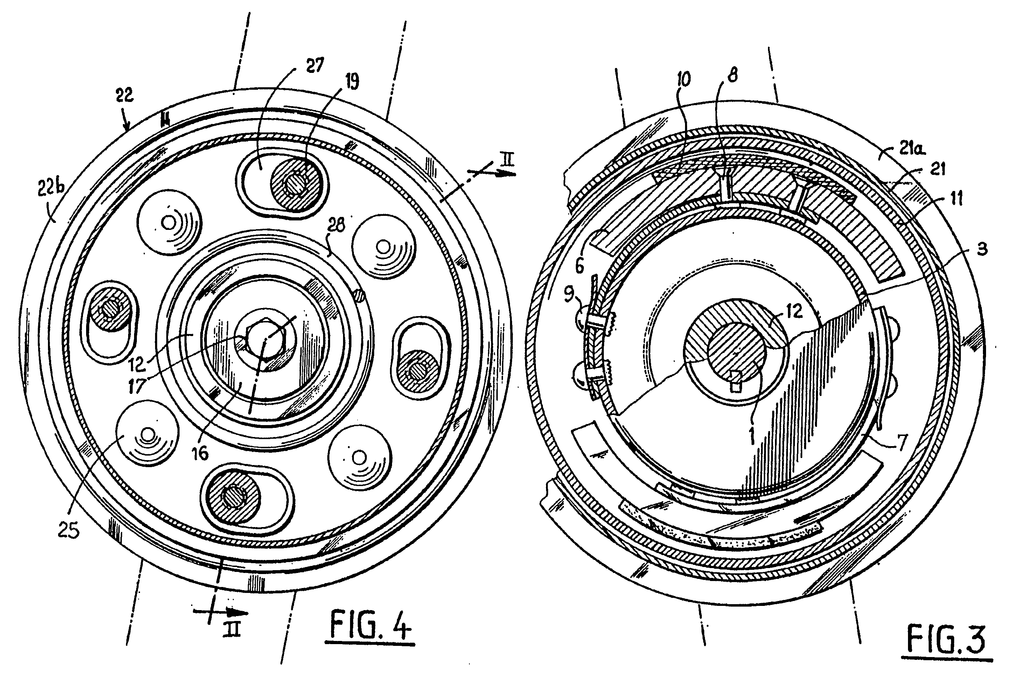

Ce tambour d'entraînement 3 porte à sa périphérie externe deux masselottes 6 par l'intermédiaire de deux ressorts à lame 7 qui les sollicitent vers le tambour 3 (voir figure 3). Les masselottes 6 ainsi que les ressorts à lame 7 sont adaptés à la forme du tambour d'entraînement 3 et ils s'étendent dans leur position de repos à peu près suivant la périphérie du tambour. Chaque masselotte est fixée au ressort correspondant par des organes de fixation 8 et chaque ressort est fixé au tambour 2 par des organes de fixation 9.

Les deux ensembles formés respectivement par une masselotte et un ressort à lame sont disposés diamètralement opposés l'un par rapport à l'autre afin d'obtenir un équilibre optimal de l'embrayage lors de son fonctionnement. Chaque masselotte 6 est, sur une partie de sa surface extérieure, munie d'une garniture de friction 10 destinée à venir en appui contre un organe mené tel un tambour mené 11 afin d'entraîner celui-ci en rotation.

Le tambour mené 11 est monté fou sur l'arbre d'entraînement 1 par l'intermédiaire d'un moyeu 12 et d'un roulement à billes 13. Le moyeu 12 est bloqué axialement sur le roulement à l'aide d'une bague d'arrêt 15 et le roulement est lui-même bloqué par un flasque 16 et une vis 17.

Le tambour mené 11 comporte une partie cylindrique coopérant avec les masselottes 6 et une partie radiale. Cette dernière comporte quatre empreintes coniques 18 régulièrement espacées angulairement. Le tambour mené 11 porte en outre, sur sa partie radiale, quatre colonnettes axiales 19, régulièrement disposées, entre elles et par rapport aux empreintes 18. Chaque colonnette est pourvue d'un trou central fileté destiné à recevoir une vis de fixation 20.

L'embrayage est confiné entre deux plateaux de frein 21 et 22 en forme de cuvette circulaire. Le plateau 21, du côté du moteur, constitue un carter fixe et relié au bâti (non représenté) de la machine à l'aide de vis de fixation 23. Il est muni d'un trou central traversé par l'arbre moteur 1. Le plateau 21 comporte une collerette 21a pouvant venir en appui contre une collerette correspondante 22a de l'autre plateau 22.

Le plateau 22 est monté rotatif et entraîné en rotation par le tambour mené 11. Il est monté coulissant axialement par rapport à ce tambour et plus précisément par rapport au moyeu 12 (voir figure 4). Le plateau mobile 22 comporte à cet effet une collerette 24 autour de son trou central. Le plateau mobile 22 est pourvu de quatre empreintes coniques 25 régulièrement disposées afin de coopérer avec les empreintes 18 du tambour mené 11. Les empreintes coniques 25 sont dirigées dans un sens opposé par rapport aux empreintes 18 du tambour mené 11. Les empreintes 18 du tambour mené 11 et celles du plateau mobile 22 sont disposées en regard les unes des autres lorsque le tambour mené est immobilisé. Des billes 26 sont logées dans l'espace entre les empreintes correspondantes. Les parois des empreintes constituent des rampes sur lesquelles les billes peuvent être déplacées.

Le plateau de frein mobile 22 est en outre pourvu de lumières oblongues 27, régulièrement réparties sur le plateau et destinées à coopérer avec les colonnettes 19 du tambour mené 11. Les colonnettes 19 passent par les lumières 27 et cet agencement permet un certain décalage angulaire du plateau de frein mobile 22 par rapport au tambour mené 11. Ce déplacement relatif peut continuer jusqu'à ce que les colonnettes viennent en butée contre le bord des lumières, assurant ainsi l'entraînement en rotation du plateau de frein 22 à la même vitesse que le tambour d'embrayage.

Un ressort hélicoïdal 28 prend appui d'un côté sur le plateau de frein mobile 22 et de l'autre côté sur un flasque d'appui 29, et sollicite le plateau de frein mobile 22 contre le plateau de frein fixe 21.

Le flasque 29 est pourvu d'un rebord 29a servant de butée pour le plateau de frein mobile 22. Le flasque d'appui 29 est fixé par les vis de fixation 20 aux colonnettes 19 du tambour mené 11 et il est donc solidaire en rotation de celui-ci. La lame rotative 2 est montée à l'extérieur du flasque 29 et fixée à deux des colonnettes 19.

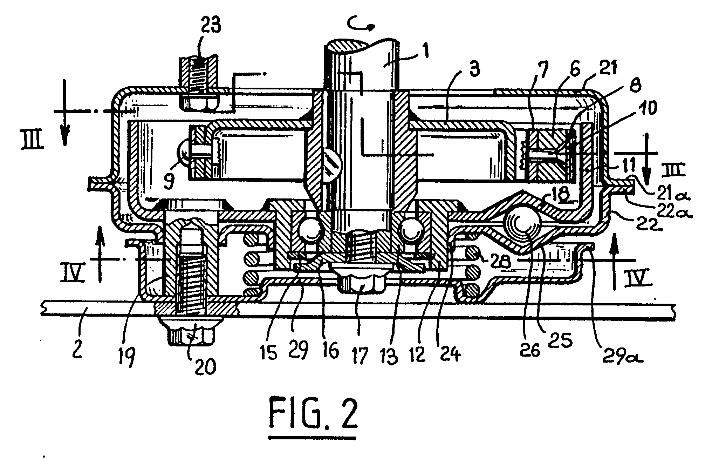

Le dispositif fonctionne de la façon suivante. La position de départ est illustrée sur les figures 2 à 4. Le moteur est soit à l'arrêt soit au ralenti et, dans ce second cas, l'arbre d'entraînement 1 tourne lentement. Lorsqu'on agit sur le réglage des gaz pour augmenter la vitesse de rotation de l'arbre d'entraînement, la vitesse de rotation du tambour d'entraînement 3 augmente. Les masselottes 6 s'écartent à l'encontre de l'action des ressorts à lame 7 et, lorsque le tambour d'entraînement 3 atteint une vitesse angulaire donnée, les garnitures de friction 10 des masselottes 6 viennent en appui contre la paroi axiale du tambour mené 11 et l'entraînent en rotation.

Dès que le tambour mené 11 commence à tourner, les billes 26 agissent sur les rampes adjacentes des empreintes coniques, ce qui repousse axialement le plateau 22 à l'encontre du ressort 28 et l'éloigne du plateau fixe 21.

La forme oblongue des lumières 27 autorise le faible débattement angulaire entre le plateau mobile 22 et le tambour mené 11, nécessaire pour que les billes 26 puissent agir sur les rampes.

La lame rotative 2 est ainsi libérée et entraînée à la vitesse du tambour mené 11. La force centrifuge agit non seulement sur les masselottes 6 mais également sur les billes 26 qui exercent ainsi une pression radiale sur les rampes opposées et empêchent de cette façon le plateau mobile de reprendre sa position en butée contre le plateau fixe.

Lorsque l'utilisateur coupe les gaz ou ramène le moteur au ralenti, la force centrifuge agissant sur les masselottes diminue ou disparaît et les masselottes sont ramenées par les ressorts à lame vers leur position inactive. Le tambour mené continue à tourner pendant quelques instants à cause de l'inertie, mais sa vitesse de rotation diminue rapidement, ce qui entraîne une diminution proportionnelle de la force centrifuge exercée sur les billes qui ne maintiennent plus le plateau mobile dans sa position écartée du plateau fixe. Le plateau mobile est ainsi sollicité par le ressort hélicoïdal vers sa position initiale contre le plateau fixe 21 provoquant ainsi le freinage et l'immobilisation de la lame 2.

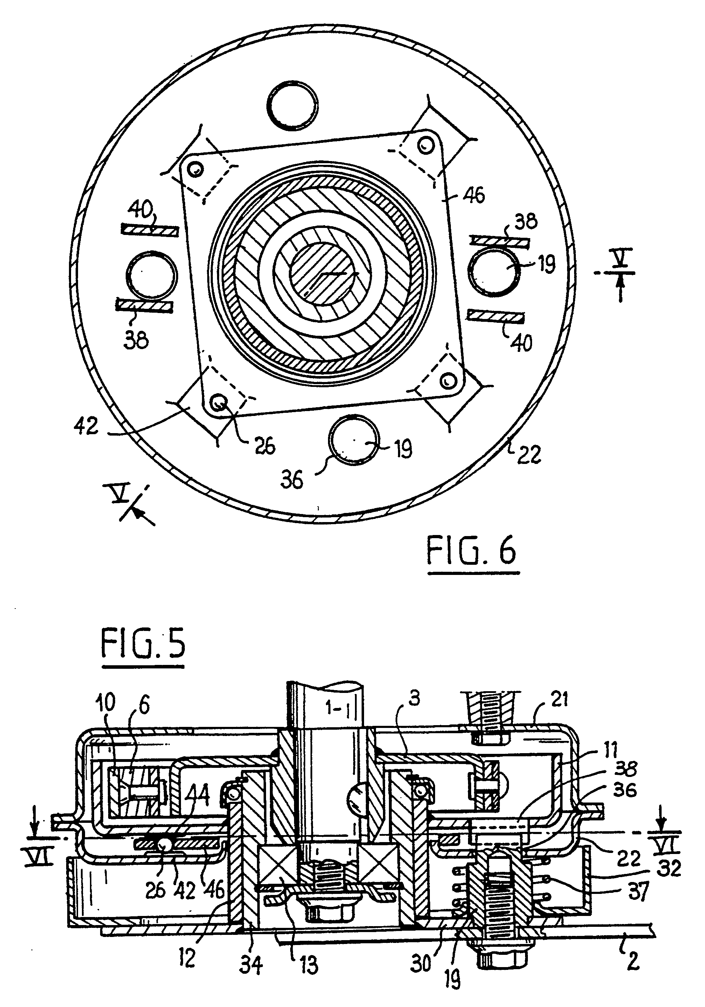

Selon une variante de réalisation représentée sur les figures 5 et 6, la lame 2 est fixée, par l'intermédiaire de vis 20 et de colonnettes 19, sur un plateau 30 bordé à sa périphérie par une couronne 32 de butée de déplacement axial du plateau mobile 22 et solidaire d'un moyeu central 34 qui est interposé entre le roulement à billes 13 et le moyeu 12 du tambour mené 11 et sur lequel le moyeu 12 peut tourner librement.

Les colonnettes 19 traversent le plateau mobile 22, par des trous circulaires 36, avec un léger jeu permettant le déplacement axial de ce plateau. Des ressorts 37 montés autour des colonnettes 19 et en appui sur le plateau 30 repoussent le plateau mobile de frein 22 contre le plateau fixe 21.

Les colonnettes 19 ne traversent pas le tambour 11. Ce dernier comporte au moins une paire de butées 38, 40 (deux paires dans le cas de la figure 5) en saillie en direction du plateau mobile 22, qui limitent le décalage angulaire relatif du tambour mené 11 et du plateau mobile 22 ou de la lame 2, à un angle d'environ 10 à 15 degrés, en venant en contact avec l'extrémité de la colonnette correspondante.

Dans l'exemple de réalisation représenté les butées 38 et 40 sont des pattes découpées dans le fond du tambour 11 et rabattues vers l'extérieur mais il est évident qu'elles peuvent être constituées par des éléments rapportés ou de tout autre manière appropriée.

Lorsque le moteur démarre et atteint une vitesse suffisante pour que les masselottes 6 appliquent la garniture 10 contre le tambour 11 et commencent à faire tourner celui-ci, les butées 38, 40 se déplacent par rapport aux colonnettes 19. Ces dernières restent immobiles, par contre les billes agissent sur les rampes du tambour et du plateau pour écarter le plateau mobile 22 du plateau 21. Le frein est alors supprimé et la lame 2 est entraînée à la vitesse du tambour mené 11.

De préférence, les rampes opposées 42, 44 du tambour et du plateau mobile sont rapportées en saillie sur les faces en regard des deux organes (Fig.5). Elles ont des profils analogues à ceux des rampes 18, 25 de la figure 2. Une cage à billes 46 est montée entre les deux rampes 42, 44 autour du moyeu 12.

Pendant la rotation du moteur et du tambour mené 11, le contact de la butée 40 contre la colonnette 19 maintient les billes dans la position d'écartement des rampes 42, 44. Par contre lorsque, les gaz ayant été coupés, le moteur s'arrête et le tambour 11 ralentit, la lame ralentissant moins vite du fait de son inertie, la colonnette 19 s'éloigne de la butée 40 et la rampe 44 portée par le plateau mobile effectue un déplacement angulaire qui permet aux billes 26 de libérer le plateau mobile 22 qui est immédiatement appliqué contre le plateau 21 par le ressort 37. La lame 2 est freinée et s'arrête.

Le dispositif selon l'invention offre ainsi la possibilité d'utiliser une seule commande, plus précisément la commande des gaz, pour combiner les deux fonctions de commande des gaz et de commande de l'embrayage. Le dispositif constitue en même temps un frein de lame automatique très efficace car la lame est stoppée dès que la commande des gaz est actionnée, ce qui offre toute garantie au niveau de la sécurité.

Par ailleurs, ce dispositif est réalisé à partir d'éléments simples, et donc bon marché. Il n'offre pas un encombrement supérieur à celui des agencements existants et il est logé à l'intérieur d'un carter dont les deux éléments 21 et 22 font partie des moyens de freinage de l'outil rotatif.

L'embrayage selon l'invention peut être appliqué à tout outil entraîné par un moteur à vitesse réglable.

**Revendications**

1. Dispositif d'entraînement d'un organe rotatif (2), comprenant un arbre moteur (1), un mécanisme d'embrayage qui est disposé entre l'arbre moteur (1) et l'organe rotatif (2), et qui est constitué entre autres d'un organe menant (3) solidaire en rotation de l'arbre moteur (1) et d'un organe mené (11) entraînant en rotation l'organe rotatif (2), un organe de freinage fixe (21) en forme de plateau muni d'une collerette (21a) et percé d'un trou central traversé par l'arbre moteur (1) et un organe de freinage mobile (22) muni d'une collerette (22a) destinée à coopérer avec cette collerette (21a), monté coulissant axialement et supporté par l'organe rotatif (2), au moins un organe élastique (28, 37) sollicitant axialement l'organe de freinage mobile (22) vers l'organe de freinage fixe (21), des moyens d'écartement (18, 25, 26 ; 26, 42, 44) pour écarter l'organe de freinage mobile de l'organe de freinage fixe par l'effet d'une force centrifuge, caractérisé en ce que lesdits moyens d'écartement sont disposés de manière distincts du mécanisme d'embrayage pour écarter automatiquement l'organe de freinage mobile (22) de l'organe de freinage fixe (21) seulement après que l'organe mené (11) est entraîné en rotation et en ce que l'organe de freinage mobile (22) est monté à la fois coulissant axialement (déplacement axial) et mobile angulairement (décalage angulaire) sur un angle déterminé par rapport à l'organe mené (11).

2. Dispositif d'entraînement d'un organe rotatif suivant la revendication 1, caractérisé en ce que l'une au moins des surfaces radiales en regard, de l'organe de freinage mobile (22) et de l'organe mené (11) comporte une rampe (18, 25) destinée à coopérer avec un élément de roulement (26), constituant ainsi les moyens d'écartement.

3. Dispositif suivant la revendication 2, caractérisé en ce que l'organe de freinage mobile est un plateau mobile (22) muni d'un trou central par lequel il est monté coulissant axialement sur un moyeu cylindrique (12) de l'organe mené (11).

4. Dispositif suivant les revendications 1 à 3, caractérisé en ce que des pièces de liaison sont disposées entre l'organe mené (11) et l'organe rotatif (2), lesdites pièces de liaison étant constituées par des colonnettes axiales (19) qui sont fixées à l'organe rotatif (2) et régulièrement réparties sur celui-ci, qui traversent le plateau mobile (22) avec un jeu permettant son déplacement axial et son décalage angulaire, et qui sont solidaires en rotation de l'un des éléments constitués par le plateau mobile (22) et le tambour mené (11).

5. Dispositif suivant la revendication 4, caractérisé en ce que les colonnettes (19) sont fixées sur la face plane de l'organe mené (11) et traversent le plateau mobile (22) par des lumières (27) régulièrement réparties sur celui-ci et destinées à coopérer avec les colonnettes (19) afin de permettre ledit décalage angulaire.

6. Dispositif suivant la revendication 5, caractérisé en ce que lesdites lumières (27) du plateau mobile (22) ont une forme oblongue et incurvée.

7. Dispositif suivant la revendication 4, caractérisé en ce que les colonnettes (19) son solidaires en rotation du plateau mobile (22) et en ce que l'organe mené (11) comporte sur sa partie radiale deux butées espacées (38, 40) de limitation de son décalage angulaire par rapport au plateau mobile (22), qui sont susceptibles d'entrer en contact avec la colonnette (19).

8. Dispositif suivant l'une quelconque des revendications 2 à 7, caractérisé en ce que l'élément de roulement (26) est constitué par une bille.

9. Dispositif suivant l'une quelconque des revendications 2 à 8, caractérisé en ce que les rampes (18, 25) sont constituées par des empreintes coniques, le maintien des moyens d'écartement sur les rampes étant assuré par l'effet de la force centrifuge lors de l'entraînement de l'organe.

10. Dispositif suivant l'une des revendications 2 à 8, caractérisé en ce que les rampes (42, 44) sont rapportées, en saillie, sur lesdites surfaces radiales.

11. Dispositif suivant l'une quelconque des revendications précédentes, caractérisé en ce que ledit organe élastique (28, 37) comprend au moins un ressort hélicoïdal prenant appui d'un côté sur le plateau mobile (22) et de l'autre sur un organe d'appui (29, 30) fixé sur lesdites colonnettes (19).

12. Dispositif suivant la revendication 11, caractérisé en ce que l'organe d'appui (29, 30) comporte un rebord (29a, 32) servant de butée de déplacement axial au plateau mobile (22).

13. Dispositif suivant l'une quelconque des revendications 2 à 12, caractérisé en ce que l'élément de roulement (26) est une bille portée par une cage à billes (46).

## Patentansprüche

1. Antriebsvorrichtung eines drehbaren Organs (2), mit einer Motorwelle (1), einem Kupplungsmechanismus, der zwischen der Motorwelle (1) und dem drehbaren Organ (2) angeordnet ist und der unter anderem aus einem antreibenden Organ (3), welches drehfest mit der Motorwelle (1) ist, und einem angetriebenen Organ (11), welches das drehbare Organ (2) drehend antreibt, aufgebaut ist, einem festen Bremsteil (21) in Form einer Platte, versehen mit einem Kragen (21a) und durchsetzt von einem Mittelloch, das von der Motorwelle (1) durchquert wird, und einem beweglichen Bremsteil (22), versehen mit einem Kragen (22a), der zum Zusammenwirken mit dem Kragen (21a) bestimmt ist, axial gleitbar angebracht und von dem drehbaren Organ (2) getragen, wenigstens einem elastischen Teil (28, 37), das axial das bewegliche Bremsteil (22) gegen das feste Bremsteil (21) belastet, Distanzeinrichtungen (18, 25, 26 ; 26, 42, 44), um das bewegliche Bremsteil und das feste Bremsteil durch die Wirkung einer zentrifugalen Kraft voneinander zu entfernen, dadurch **gekennzeichnet,** daß die Distanzeinrichtungen beabstandet vom Kupplungsmechanismus angeordnet sind, um selbsttätig das bewegliche Bremsteil (22) von dem festen Bremsteil (21) nur zu entfernen, nachdem das angetriebene Organ (11) drehangetrieben ist, und daß das bewegliche Bremsteil (22) zugleich axial gleitend (axiale Versetzung) und um einen Winkel, der in bezug auf das angetriebene Organ (11) festgelegt ist, winkelmäßig beweglich (winkelmäßige Verlagerung) angebracht ist.

2. Antriebsvorrichtung eines drehbaren Organs nach Anspruch 1, dadurch gekennzeichnet, daß eine wenigstens der radialen Flächen gegenüber dem beweglichen Bremsteil (22) und dem angetriebenen Organ (11) eine Steigung (18, 25) aufweist, die zum Zusammenwirken mit einem Rollelement (26) ausgelegt ist, wodurch somit die Distanzeinrichtungen gebildet werden.

3. Vorrichtung nach Anspruch 2, dadurch gekennzeichnet, daß das bewegliche Bremsteil eine bewegliche Platte (22) ist, die mit einem Mittelloch versehen ist, durch welches sie axial gleitend auf einer zylindrischen Nabe (12) des angetriebenen Organs (11) angebracht ist.

4. Vorrichtung nach den Ansprüchen 1 bis 3, dadurch gekennzeichnet, daß Verbindungsstücke zwischen dem angetriebenen Organ (11) und dem drehbaren Organ (2) angeordnet sind, wobei die Verbindungsstücke durch axiale Säulen (19) aufgebaut sind, welche an dem drehbaren Organ (12) befestigt und regelmäßig auf diesem verteilt sind, welche die bewegliche Platte (22) mit einem Spiel durchsetzen, welches ihre axiale Versetzung und ihre winkelmäßige Verlagerung zuläßt und welche drehfest zu einem der Elemente, die durch die bewegliche Platte (12) und die angetriebene Trommel (11) gebildet sind, ist.

5. Vorrichtung nach Anspruch 4, dadurch gekennzeichnet, daß die Säulen (19) auf der ebenen Fläche des angetriebenen Organs (11) befestigt sind und die bewegliche Platte (22) durch Langlöcher (27) durchsetzen, die regelmäßig auf dieser verteilt sind und zum Zusammenwirken mit den Säulen (19) bestimmt sind, um die winkelmäßige Verlagerung zuzulassen.

6. Vorrichtung nach Anspruch 5, dadurch gekennzeichnet, daß die Langlöcher (27) der beweglichen Platte (22) eine längliche und bogenförmige Form haben.

7. Vorrichtung nach Anspruch 4, dadurch gekennzeichnet, daß die Säulen (19) drehfest mit der beweglichen Platte (22) sind und daß das angetriebene Organ (11) auf seinem radialen Teil zwei beabstandete Anschläge (38, 40) zur Begrenzung seiner winkelmäßigen Verlagerung in bezug auf die bewegliche Platte (22) aufweist, welche in Kontakt mit der Säule (19) treten können.

8. Vorrichtung nach einem der Ansprüche 2 bis 7, dadurch gekennzeichnet, daß das Rollelement (26) durch eine Kugel gebildet ist.

9. Vorrichtung nach einem der Ansprüche 2 bis 8, dadurch gekennzeichnet, daß die Steigungen (18, 25) durch konische Vertiefungen gebildet sind, wobei das Halten der Distanzeinrichtungen auf den Steigungen durch den Effekt der Zentrifugalkraft während des Antriebs des angetriebenen Organs sichergestellt ist.

10. Vorrichtung nach einem der Ansprüche 2 bis 8, dadurch gekennzeichnet, daß die Steigungen (42, 44) auf den radialen Flächen aufgesetzt sind.

11. Vorrichtung nach einem der vorangehenden Ansprüche, dadurch gekennzeichnet, daß das elastische Element (28, 37) wenigstens eine spiralförmige Feder aufweist, welche einerseits an der beweglichen Platte (22) und andererseits an einem Anschlagorgan (29, 30) anstößt, das auf den Säulen (19) befestigt ist.

12. Vorrichtung nach Anspruch 11, dadurch gekennzeichnet, daß das Anschlagorgan (29, 30) eine Leiste (29a, 32) umfaßt, welche zur Begrenzung der axialen Versetzung zur beweglichen Platte (22) dient.

13. Vorrichtung nach einem der Ansprüche 2 bis 12, dadurch gekennzeichnet, daß das Rollelement (26) eine Kugel ist, die von einem Kugelkäfig getragen ist.

## Claims

1. Driving device for a rotating member (2), comprising a driving shaft (1), an engaging mechanism which is positioned between the driving shaft (1) and the rotating member (2), and which is constituted by, amongst other things, a driving device (3) rotating as an integral part of the driving shaft (1) and a driven member (11) causing the rotating member (2) to rotate, a fixed braking device (21) in the form of a plate provided with a flange (21a) and having a central hole through which the driving shaft (1) passes, and a mobile braking device (22) provided with a flange (22a) designed to cooperate with the said flange (21a), mounted capable of sliding axially and supported by the rotating member (2), at least one flexible member (28, 37) axially forcing the mobile braking device (22) towards the fixed braking device (21), means of separation (18, 25, 26 ; 26, 42, 44) for separating the mobile braking device from the fixed braking device by the effect of a centrifugal force, characterised in that said means of separation are arranged in such a way as to be separate from the engaging mechanism for automatically separating the mobile braking device (22) from the fixed braking device (21) only after the driven member (11) is caused to rotate, and in that the mobile braking device (22) is mounted both axially sliding (axial displacement) and angularly mobile (angular shift) over an angle determined with respect to the driven member (11).

2. Driving device for a rotating member according to claim 1, characterised in that at least one of the radial surfaces of the mobile braking device (22) and driven member (11), lying opposite one another, includes a ramp (18, 25) designed to cooperate with a roller element (26), thus forming the means of separation.

3. Device according to claim 2, characterised in that the mobile braking device is a mobile plate (22) provided with a central hole by means of which it is mounted so as to be axially sliding on a cylindrical hub (12) of the driven member (11).

4. Device according to claims 1 to 3, characterised in that the connection parts are positioned between the driven member (11) and the rotating member (2), the said connection parts being constituted by the axial distance sleeves (19) which are attached to the rotating member (2) and are equi-circumferential on the same, which pass through the mobile plate (22) with a degree of play permitting its axial displacement and its angular shift, and which rotate as an integral part of one of the members forming the mobile plate (22) and the driven drum (11).

5. Device according to claim 4, characterised in that the distance sleeves (19) are attached to the plane surface of the driven member (11) and pass through the mobile plate (22) via the elongated holes (27) equicircumferential on the latter and designed to cooperate with the distance sleeves (19) so as to permit said angular shift.

6. Device according to claim 5, characterised in that said elongated holes (27) of the mobile plate (22) have an oblong and curved shape.

7. Device according to claim 4, characterised in that the distance sleeves (19) rotate as an integral port of the mobile plate (22) and in that the driven member (11) has on its radial part two spaced stops (38, 40) for limiting its angular shift relative to mobile plate (22), which are capable of entering into contact with the distance sleeve (19).

8. Device according to any one of claims 2 to 7, characterised in that the roller element (26) is in the form of a ball.

9. Device according to any one of claims 2 to 8, characterised in that the ramps (18, 25) are in the form of conical shapes, the maintenance of the means of separation on the ramps being provided by the effect of the centrifugal force acting when the driven member is driven.

10. Device according to any one of claims 2 to 8, characterised in that the ramps (42, 44) are attached in a projecting fashion to the said radial surfaces.

11. Device according to any one of the preceding claims, characterised in that said flexible member (28, 37) comprises at least one helical spring resting at one end on the mobile plate (22) and at the other end on a support member (29, 30) attached to said distance sleeves (19).

12. Device according to claim 11, characterised in that the support member (29, 30) has a shoulder (29a, 32) serving as a stop to the axial displacement of the mobile plate (22).

13. Device according to any one of claims 2 to 12, characterised in that the roller element (26) is a ball carried by a ball cage (46).

FIG. 1

EP 0 288 348 B1

## FIG. 2

EP 0 288 348 B1

FIG. 4

FIG. 3

EP 0 288 348 B1

FIG. 6

FIG.5